Europäisches Patentamt

European Patent Office

Office européen des brevets

(11) Publication number: **0 261 733 B1**

## EUROPEAN PATENT SPECIFICATION

(45) Date of publication of patent specification: **15.01.92**

(21) Application number: **87201782.7**

(22) Date of filing: **17.09.87**

(51) Int. Cl.⁵: **H01B 1/20,** H01B 1/12, C08G 79/00, C07D 487/22

(54) **Conductive polymer compositions.**

(30) Priority: **22.09.86 GB 8622752**

(43) Date of publication of application:
**30.03.88 Bulletin 88/13**

(45) Publication of the grant of the patent:
**15.01.92 Bulletin 92/03**

(84) Designated Contracting States:
**BE DE ES FR GB IT NL SE**

(56) References cited:
**EP-A- 0 144 600**
**EP-A- 0 168 620**
**DE-A- 3 245 750**
**US-A- 4 563 300**

(73) Proprietor: **SHELL INTERNATIONALE RE-
SEARCH MAATSCHAPPIJ B.V.
Carel van Bylandtlaan 30
NL-2596 HR Den Haag(NL)**

(72) Inventor: **Brokken-Zijp, Josephina Cornelia
Maria
Badhuisweg 3
NL-1031 CM Amsterdam(NL)**
Inventor: **Gerards, Leonard Egbert Henri
Badhuisweg 3
NL-1031 CM Amsterdam(NL)**
Inventor: **Hanack, Michael
University of Tübingen Auf der Morgenstelle
18
W-7400 Tübingen 1(DE)**

(74) Representative: **Tuijn, Jan Warnaar et al
Shell Internationale Research Maatschappij
B.V., Patents, Licensing & Trade Marks Di-
vision, P.O. Box 302
NL-2501 CH The Hague(NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

**Description**

The present invention is concerned with electrically conductive polymer compositions comprising a thermoplastic, thermosetting or elastomeric polymer and certain polymeric, organic conductors.

Organic conductors recently have received much attention in scientific literature, an interesting species thereof is represented by macrocyclic metal complex polymers. In this species three different types of compounds have been defined by Hanack et al, in the Textbook: "Conductive Polymers" (Marcel Dekker publishers) 1986, viz. ladder polymers, plane polymers and compounds in which the macrocyclic structures are in linear, stacked arrangement. In its turn the latter group of compounds is divided in two sub-groups, being a) stacked arrangements which are not or insufficiently conductive but which become conductive after doping, and b) stacked arrangements which per se are excellent conductors, hence they do not need doping. Examples of sub-group a) are phthalocyanato nickel (tetrabenzotetraazaporphyrin nickel) to be doped with iodine, and oxo-, sulphur- or fluorine-bridged phthalocyanato metal complexes, once again to be doped with iodine. Examples of sub-group b) are cyanophthalocyanato cobalt and pyrazinophthalocyanato iron.

Hanack's general description (1.c. pp. 133, 136, 151 and 152) of sub-group b) is: - stacked, macrocyclic metal complex polymers, based upon porphyrin or a derivative thereof, which comprise organic bridging ligands containing conjugated pi-electrons allowing electron delocalization along the polymer axis and in which the metal atom is Fe, Ru, Co, Mn or Cr-. In accordance with DE-A 3,245,750 another suitable metal atom is Rh. It is with the group of polymers so defined that the present invention is concerned and in the following parts of this description, this group of polymers shall be shortly referred to as "intrinsically conductive polymers".

Insolubility or limited solubility with simultaneous complete decomposition of many organic conductors has so far hampered their successful commercialization. Lack of adequate solubility particularly applies to intrinsically conductive polymers. In order to circumvent solubility problems it has been proposed in DE-A 3,421,993 to process particulate super-conductors by compression-moulding at an extremely elevated pressure. However, since this moulding method is to be carried out in an intricate mould of a special novel construction combining both high pressure and high vacuum technology, this known method is too complicated for practical application.

Investigations of the Applicants have now led to the finding of suitable solvents for the above-defined group of intrinsically conductive polymers. This opens a way towards an attractive processing method for making conductive, hybrid polymer compositions comprising intrinsically conductive polymers and a non-conductive polymer and conceiving the latter is the main object of this invention.

In accordance with this invention the Applicants provide a novel process for preparing an electrically conductive polymer composition which comprises preparing a blend of a solution of an intrinsically conductive polymer (component a) and a thermosetting, thermoplastic or elastomeric polymer (component b) and optionally removing the solvent, component a being employed in a weight ratio to component b of from 0.005:1 to 3:1, the solution having a solids content of from 2 to 75%wt, the intrinsically conductive polymer being an electrically conductive, stacked macrocyclic metal complex polymer based upon porphyrin or a derivative thereof which comprises an organic bridging ligand containing conjugated $\pi$-electrons allowing delocalization along the polymer chain and in which the metal atom is Fe, Ru, Rh, Co, Mn or Cr and the solvent being selected from 1,3-dimethyl-2-imidazolidanon, hexamethylphosphortriamide, cyclohexanon, ethylene carbonate, dimethyl acetamide, nitrobenzene, ethylene glycol, glycerol, glycerolmonostearate, N-methyl 2-pyrolidon, 1,3-dimethyl-3,4,5,6-tetrahydro-2-pyrimidon, sulfolane, sulphuric acid and m-cresol.

In principle, any of the intrinsically conductive polymers described in Hanack's Textbook can be employed in the process of this invention, provided their conductivity is sufficiently attractive to warrant practical application. These polymers can for easy reference be schematically represented by the formula [-M'-L-]n, in which n is an integer of at least 5, preferably at least 10, L is the organic bridging ligand, M represents the metal atom and the symbol ' denotes the macrocyclic structure surrounding the metal atom and being arranged perpendicularly to the linear polymer axis. This formula includes all possibilities for linking the metal atoms to the bridging ligands, i.e. 1. by two sigma-bonds, 2. by one sigma-bond and one coordinate bond, and 3. by two coordinate bonds. Preferably the metal atoms are iron or cobalt, whilst preferred bridging ligands are chosen from the group comprising cyano, pyrazine, tetrazine, bypyridine, diisocyanobenzene, pyrazine, tetrazine and bypridylethyn, azide and thiocyano. Preferred macrocyclic structures are porphyrin, tetrabenzoporphyrin, octa ethylporphyrin, tetramethylporphyrin, hemiporphyrazin, tetraphenyl porphyrin, tetrabenzotetraazaporphyrin (≡ phthalocyanine), tetranaphthalo tetraazaporphyrin. Both the bridging ligand and the macrocyclic structure can carry one or are substituents in addition to the

2

ones already listed. Examples of substituted bridging ligands are dicyano tetramethylbenzene, dicyanotetrachlorobenzene, and 2,2'dimethylbipyridine. Examples of substituted macrocyclic structures are octamethylphthalocyanine, octamethoxy phthalocyanine, hexadecachlorophthalocyanine, tetranitrophthalo cyanine.

Of specific interest are cyanophthalocyanato cobalt polymers in which the phthalocyanine structure carries one single substituent selected from amino, cyano and amidyl derived of an alkane carboxylic acid with 2 to 20 carbon atoms (≡ -NH-CO-CmH2m + 1 in which m is 1 to 19). These polymers are novel and as such form part of the present invention. They can be made in a conventional way by condensing 3 mol of phthalic anhydride with 1 mol of nitrophthalic anhydride with ureum in the presence of cobaltchloride, followed by oxidation with molecular oxygen in ethanol and sodiumcyanide to produce the monomeric structure sodium cyanophthalocyanato cobalt. This in its turn is polymerized to cyanocyanophthalocyanine cobalt polymer by refluxing the monomer in aqueous medium. If the nitro-substituent in the condensation reaction product is reduced with hydrogen, an amino substituent is formed which may be reacted into monomer and the desired, mono-amino substituted polymer as set out herein above. Reaction of the amine, obtained upon hydrogenation, with R-COOH will produce R-CONH-substituted phthalocyanato cobalt, which once again can be converted into the desired monomer and polymer by the procedure set out above. Similar mono-substituted polymers can likewise be synthesized by this route. Monomeric compounds comprising hydroxy-phthalocyanine cobalt as monovalent anion are likewise novel compounds.

A second group of compounds of specific interest are cyanophthalocyanato cobalt polymers in which the phthalocyanine structure carries two amino substituents. The corresponding monomeric compound, i.e. diamino-cyanophthalocyanine cobalt is likewise a novel compound. In both these novel polymeric and monomeric compounds each of the two amino substituents is attached to different six-membered rings forming part of the porphyrine structure. The aforesaid diamino substituted novel compounds can be prepared in complete analogy to the method disclosed in the preceding complete paragraph, the only difference being the use of a 1:1 molar ratio of phthalic anhydride to nitrophthalic anhydride in the first reaction step.

The most preferred group of intrinsically conductive polymers comprise phthalocyanato cobalt and phthalocyanato iron polymers in which the bridging ligand is cyano. Another preferred group of conductive polymers are phthalocynato cobalt and phthalocyanato iron polymers in which the bridging ligand is pyrazine, tetrazine or thiocyano.

In the process of this invention the conductive polymers are employed as solutions in the envisaged solvent. The solids content (i.e. the content of conductive polymer) is set within the range of from 2 to 75 %wt, preferably from 10 to 35 %wt. These limits are related to the solubility criteria of the various polymeric compounds in the various solvents in the sense that if a conductive polymer is not sufficiently soluble in a certain solvent to produce a solution with a solids content of at least 2 %wt, then that combination of solvent and conductive polymer is excluded from this invention. Another feature of the chosen solvent is that the decomposition of the conductive polymer is minimal during the time needed to prepare the conductive composite. The preferred weight ratio of component a to component b is from 0.02 to 1 to 0.25 to 1.

For the preparation of the hybrid polymer compositions of the invention various embodiments are possible. The most convenient way is first to prepare a solution of the conductive polymer (component a) and then to dissolve or disperse the other polymer (component b) into that solution. The reverse procedure may also be adopted. A third possibility is solution blending of previously prepared solutions of component a, respectively component b. Suitable elastomeric polymers forming component b are ethylene-propylene-diene copolymers, polyisobutene, polybutadiene, neoprene, polyisoprene and styrene-butadiene copolymers which may be selected from random copolymers or block-copolymers, whether hydrogenated or not. Suitable thermosetting resins are epoxy resins, polyurethane resins, polyester resins, novolak resins and the like. Suitable thermoplastic polymers are polyvinylchloride, teflon, polyacrylates polyvinylacetate, polyvinylalcohol, polymethacrylates, polystyrene, polyamides selected from commercial nylon types, polyaramide (Kevlar or Twaron), polyethylene, polybutene polypropylene, cellulose-acetate and the like. Preferred polymers are polyolefins, polyaramides and styrene/butadiene copolymers. Most preferred are epoxy resins.

The conductive hybrid polymer compositions resulting from the process of this invention may be employed as laminates, castings, fibre reinforced articles of manufacture, coatings, paints, lacquers, varnishes, films, sheetings, non-woven fabrics, pipes, tubes, monofilaments, yarns, tyres and various mouldings, e.g. injection-mouldings, compression-mouldings and blow-mouldings.

By varying the types and content of conductive polymers in the hybrid polymer composition of this invention it is easy to manufacture end-products that have a very wide range of conductivities.

Conventional methods for processing the hybrid polymer compositions into envisaged end-products usually involve application of heat as, e.g. in extrusion, injection-moulding, vulcanizing or in the curing of resins with appropriate curing agents. The effect of heat will normally ensure adequate removal, when desired, of solvent from the hybrid compositions by evaporation. Alternative methods, e.g. chemical or physical absorption, to remove solvent may be employed as well. When sulphuric acid is used as solvent, diffusion of a hybrid polymer solution in water will provide adequate removal of solvent from the polyme r composition. As example thereof reference is made to the conventional solution spinning method of a homogeneous polyaramide/H2SO4 system. Solutions of the hybrid compositions may be employed e.g. in the field of surface coatings. With selection of appropriate intrinsically conductive polymer such coatings can be transparent and/or antistatic, thus opening an attractive possibility for the manufacture of antistatic windows for the car manufacturing industry.

Further applications of the novel hybrid compositions of this invention are in fields where properties other than conductivity are of prime interest. Examples of such fields are liquid crystalline materials, paramagnetic materials, heat-transfer materials, dyes and colourants.

Example I

Various solvents were employed to dissolve either polymeric cyanophthalocyanato cobalt(III), (ref. i) or polymeric monoamino-cyanophthalocyanato cobalt(III), (ref. ii). The solvents were hexamthylphosphortriamide (A), butanon-2 (B), 2,3 dimethylimidazolidanon (C), N-methylpyridon (D), and concentrated sulphuric acid (E). The same solvents or dimethyl formamide (F) were employed to disperse or dissolve thermoplastic polymers, thermosetting resins or curing systems. Concentrations of intrinsically conductive polymer in the final composition were varied over 5, 10, 15, 20 and 40 %wt , calculated on total weight of hybrid polymer composition, following removal of solvent by evaporation.

All hybrid compositions were tested for conductivity (sigma = $R^{-1}$), the latter was found to be less than $10^{12}$ ohm-1. $cm^{-1}$, well below the level of the polymer matrix itself. Table 1 marks the various hybrid compositions that were prepared. The conductivity is determined in line with the method disclosed in "Test Methods for Static Control Products, J.R. Huntsman and D.M. Yenni, Proceedings 1982 EOS/ESD SYMPOSIUM; Orlando, Fla., U.S.A., published by Static Control System/3M Company, St. Paul, Minnesota, U.S.A.

Table I

| exp | comp. a | comp. b | solvent for a | solvent for b | processing method |
|---|---|---|---|---|---|
| 1 | i | EPIKOTE-828, isophorondiamine | A | - | casting |
| 2 | i | EPONOL | A | B | coating |
| 3 | i | EPONOL | C | B | coating |
| 4 | i | EPONOL | D | B | coating |
| 5 | i | EPIKOTE-1009 | A | A | coating |
| 6 | i | Polyaramide | E | E | fibre spinning |
| 7 | i | Cellulosetriacetate | A | F | film casting |
| 8 | ii | EPONOL | A | B | coating |
| 9 | ii | EPIKOTE-1009 | A | A | coating |

Experiment 1 involved dissolving 0.1 g (i) in 0.6 ml solvent A, followed by dispersing a blend of 0.2 g of EPIKOTE 828 and isophorondiamine curing agent (1:1 eg. ratio) into the homogeneous phthalocyanine polymer solution. A casting was made by curing at 80°C during 0.5 hours, which heating adequately evaporated the solvent.

Experiment 2 involved dissolving 0.1 g in 0.6 ml solvent A, blending with 1.25 EPONOL, which is 40 wt% solution of a condensation product, essentially free from epoxy groups, of EPIKOTE-828 and an equivalent amount of dihydroydiphenylpropane in solvent C, and coating upon a sample comprising a zinc surface coating on a non-conductive substrate. Curing was effected by heating at 130°C during 0.5 hrs, curing proceeded via intramolecular condensation of the hydroxyl-groups, water so formed and solvent being evaporated simultaneously.

Experiments 3 and 4 were carried out in analogy to experiment 2.

Experiment 5 involved first dissolving 0.1 g (i) in ml A, then dissolving 1 g EPIKOTE-1009 in 2 ml A, blending the two solutions to form one homogeneous solution and then proceeding to form a coating as described in experiment 2.

Experiments 6.

0.4 g polyamide was dissolved in 28 g concentrated sulphuric acid under nitrogen atmosphere. 0.4 g of i was dissolved in 4 g concentrated sulphuric acid. Both solutions were mixed under nitrogen. A fibre was produced by injecting the solution into water at room temperature, the fibre was dried at 50 ° C during 24 hours.

Experiment 7 involved dissolving 10 g cellulose triacetate in 200 ml G. The solution was mixed with 2 ml of a solution of 2,5 g of i in 100 ml A. A film was cast on a glass plate and the film was dried at 50 ° C during 24 hours.

Experiments 9 and 10 were carried out in analogy to experiments 2 and 5 respectively.

Example II

Preparation of novel conductive polymers

a) 3-nitrophthalic anhydride and an equimolar amount of phthalic anhydride were condensed with $COCl_2$ and urea. The reaction product was oxidized by passing an oxygen stream through a solution of the product in ethanol under reflux in the presence of sodium cyanide. The resulting monomer was polymerized by refluxing in water during 24 hours. Upon analysis a substituted cyanophthalocyanato cobalt (III) polymer carrying on average one nitro-substituent per phthalocyanine ring appeared to have been formed upon polymerization.

b) Following condensation with $COCl_2$ and urea as set out in IIa above, the reaction product was hydrogenated in the presence of a palladium catalyst for converting the nitro substituent into an amine group. Then the preparation of monomer and polymer as disclosed in IIa above was closely followed. The same polymer as disclosed in IIa was found, the only difference being the presence of on average one amino group per ring instead of one nitril group per ring.

c) Following condensation with $COCl_2$ and urea as set out in IIa above and hydrogenation as set out in IIb, the amine groups were reacted with $C_{13}H_{27}COOH$ to form a corresponding group $C_{13}H_{27} CONH$-. The same group was found as single substituent per phthalocyanine ring made along analogous preparation of monomer and polymer.

The analysis of the polymers involved PCME determination, IR, proton and C13NMR analysis.

Example III

Preparation of novel monomeric compound.

Cobalt (II) phthalocyanine was condensed with NaCN under reflux in ethanol while passing an oxygen stream through the solution. The reaction product was recovered from the solution and dried during 24 hours in vacuum at 80 ° C. Upon PCME, IR, proton and C13NMR analysis the product was found to comprise sodium as cation and HO-Co´-CN as monovalent anion. The yield of the monomeric compound was 60-95% (of theoretical) calculated on cobalt phthalocyanine starting material.

EXAMPLE IV

In additional cunductivity experiments the same phthalocyanine polymers (i) and (ii) as defined in Example I were tested, as well as cyano-diaminephthalocyanato cobalt (iii) and tetrazinophthalocyanato iron (iv). Additional solvents were sulfolane (H), oxytol acetate (J), ethylene glycol (K), and cyclohexanone (L), other solvents were as referred to in Example I.

Table II represents a survey of these experiments together with the results of the conductivity measurements, in which the unit ohm refers to determination using two silver electrodes. The unit ohm.cm refers to use of four silver electrodes and the unit ohm.m refers to use of two electrodes. The polyaramide experiments are based upon fibre spinning, all other runs are concerned with coating trials. Experiments 11a, 16a, and 17a are for purposes of comparison.

Table II

| exp. | comp. a | comp. b | solvent for a | solvent for b | R |
|---|---|---|---|---|---|
| 11 | iii | EPONOL | H | B | $10^8$ ohm |
| 11a | - | EPONOL | - | B/H | $2 \times 10^{14}$ ohm |
| 12 | i | EPONOL | H | B | $10^5$ ohm.cm |
| 13 | i | EPONOL | H | B | $2 \times 10^5$ ohm.cm |
| 14 | iv | EPONOL | H | B | $10^6$ ohm.cm |
| 15 | i | EPONOL | J | B | $5 \times 10^7$ ohm.cm |
| 16 | i | Polyester | L | L | $9 \times 10^6$ ohm |
| 16a | - | Polyester | - | L | $10^{14}$ ohm |
| 17 | i | Polyaramide | E | E | $10^{10}$ ohm.m |
| 17a | - | Polyaramide | - | E | $10^{21}$ ohm.m |

Experiment 11 involved dissolving 0.1 g (iii) in 1 g solvent and producing a iii/matrix composition comprising 10 %wt of (iii) on composition.

In experiment 12 0.2 g of (i) was dissolved in 2 ml solvent and a i/matrix composition was made comprising 10 %wt of (i) based on the weight of the composition.

In experiment 13 0.025 g of (i) was dissolved in 0.25 solvent and a hybrid composition was made comprising 1.25 %wt of (i).

In experiment 14 0.02 g of (iv) was dissolved in 0.5 ml solvent and a hybrid composition comprising 10 %wt of (iv) was prepared.

In experiment 15 1.0 g of (i) was dissolved in 10 solvent, the hybrid composition comprised 5 %wt of (i).

In experiment 16 1.0 g of (ii) was dissolved in 1.5 g solvent, the hybrid composition comprised 10 %wt of (i).

In experiment 17 0.04 g of (ii) was dissolved in 0.4 ml solvent and a melt-spun fibre was produced comprising 40 %wt of (ii), based on the weight of the fibre.

Example V

Preparation of novel conductive polymer: 16.6 g phthalic acid and 21.1 g 4-nitrophthalic acid were condensed with 9.9 g of $COCl_2$, 62 g of urea and 0.5 g of ammoniummolybdate in the presence of 260 ml nitrobenzene. This reaction proceeded in a stirred suspension during 3.5 hrs at 190 °C. The reaction product was isolated, washed, refluxed in 1N aqueous HCl. Upon analysis a substituted cyanophthalocyanato cobalt polymer carrying on average two nitro-substituents per phthalocyanine ring structure was evidenced. Corresponding diamine-substituted polymer was obtained following hydrogenation in the presence of a palladium catalyst.

**Claims**

1. A process for preparing an electrically conductive polymer composition which comprises preparing a blend of a solution of an intrinsically conductive polymer (component a) and a thermosetting, thermoplastic or elastomeric polymer (component b) and optionally removing the solvent, component a being employed in a weight ratio to component b of from 0.005:1 to 3:1, the solution having a solids content of from 2 to 75%wt, the intrinsically conductive polymer being an electrically conductive, stacked macrocyclic metal complex polymer based upon porphyrin or a derivative thereof which comprises an organic bridging ligand containing conjugated $\pi$-electrons allowing delocalization along the polymer chain and in which the metal atom is Fe, Ru, Rh, Co, Mn or Cr and the solvent being selected from 1,3-dimethyl-2-imidazolidanon, hexamethylphosphortriamide, cyclohexanon, ethylene carbonate, dimethyl acetamide, nitrobenzene, ethylene glycol, glycerol, glycerolmonostearate, N-methyl 2-pyrolidon, 1,3-dimethyl-3,4,5,6-tetrahydro-2-pyrimidon, sulfolane, sulphuric acid and m-cresol.

2. A process as claimed in claim 1, in which the metal atom is Fe or Co and the macrocyclic structure is phthalocyanine.

3. A process as claimed in claim 1 or 2, in which the solvent is selected from 1,3-dimethyl-2-imidazolidanon, hexamethylposphortriamide, cyclohexanon, ethylene carbonate, dimethyl acetamide, nitrobenzene, ethylene glycol, glycerol, glycerolmonostearate, N-methyl 2-pyrolidon, 1,3-dimethyl-3,4,5,6-tetrahydro-2-pyrimidon, sulfolane, sulphuric acid and m-cresol.

4. A process as claimed in any one of claims 1 to 3, in which the organic bridging ligand is cyano, pyrazine, tetrazine, bypyridine, bipyridylethyn, thiocyanide, aside or diisocyanobenzene.

5. A process as claimed in any one of claims 1 to 4, in which the thermosetting polymer is an epoxy resin.

6. A process as claimed in any one of claims 1 to 4, in which the thermoplastic polymer is a polyolefin.

7. A process as claimed in any one of claims 1-4, in which the thermoplastic polymer is a polyaramide.

8. A process as claimed in any one of claims 1-4, in which the elastomeric copolymer is a styrene/butadiene copolymer.

9. A process as claimed in any one of claims 1-8, in which the weight ratio of component a to component b is from 0.02:1 to 0.25:1.

10. A process as claimed in any one of claims 1 to 9, in which the solids content is 2 up to 35%wt.

**Revendications**

1. Un procédé pour préparer une composition polymère électriquement conductrice, dans lequel on prépare un mélange d'une solution d'un polymère intrinsèquement conducteur (constituant a) et un polymère thermodurcissable, thermoplastique ou élastomère (constituant b) et dans lequel on élimine facultativement le solvant, le constituant a étant utilisé selon un rapport pondéral par rapport au constituant b de 0,005:1 à 3:1, tandis que la solution présente une teneur en solide de 2 à 75 % en poids, le polymère intrinsèquement conducteur étant un polymère empilé macrocyclique à complexe métallique, basé sur la porphyrine ou un dérivé de celui-ci qui comprend un ligand de pontage organique renfermant des électrons piconjugués, et permettant une des localisations sur la chaîne polymère et dans lequel l'atome métallique est Fe, Ru, Rh, Co, Mn ou Cr tandis que le solvant est choisi parmi la 1,3-diméthyl-2-imidazolidanone, l'hexaméthylphosphorotriamide, la cyclohexanone, le carbonate d'éthylène, le diméthyl acétamide, le nitrobenzène, l'éthylène glycol, le glycérol, le monostéarate de glycérol, la N-méthyl 2-pyrrolidone, la 1,3-diméthyl-3,4,5,6-tétrahydro-2-pyrimidone, le sulfolane, l'acide sulfurique et le m-crésol.

2. Un procédé tel que revendiqué dans la revendication 1, dans lequel l'atome de métal est Fe ou Co et la structure macrocyclique est la phtalocyanine.

3. Un procédé tel que revendiqué dans la revendication 1 ou 2, dans lequel le solvant est choisi parmi la 1,3-diméthyl-2-imidazolidanone, l'hexaméthylphosphorotriamide, la cyclohexanone, le carbonate d'éthylène, le diméthyl acétamide, le nitrobenène, l'éthylène glycol, le glycérol, le monostéarate de glycérol, la N-méthyl 2-pyrrolidone, la 1,3-diméthyl-3,4,5,6-tétrahydro-2-pyrimidone, le sulfolane, l'acide sulfurique et le m-crésol.

4. Un procédé tel que revendiqué dans l'une quelconque des revendications 1 à 3, dans lequel le ligand de pontage organique est du cyano, la pyrazine, la tétrazine, la bipyridine, la bipyridyléthyne, le thiocyanure, l'azide ou le diisocyanobenzène.

5. Un procédé tel que revendiqué dans l'une quelconque des revendications 1 à 4, dans lequel le polymère thermodurcissable est une résine époxy.

6. Un procédé tel que revendiqué dans l'une quelconque des revendications 1 à 4, dans lequel le polymère thermoplastique est une polyoléfine.

**7.** Un procédé tel que revendiqué dans l'une quelconque des revendications 1 à 4, dans lequel le polymère thermoplastique est un polyaramide.

**8.** Un procédé tel que revendiqué dans l'une quelconque des revendications 1 à 4, dans lequel le copolymère élastomère est un copolymère styrène/butadiène.

**9.** Un procédé tel que revendiqué dans l'une quelconque des revendications 1 à 8, dans lequel le rapport pondéral du constituant a au constituant b est de 0,02:1 à 0,25:1.

**10.** Un procédé tel que revendiqué dans l'une quelconque des revendications 1 à 9, dans lequel la teneur en solide est de 2 jusqu'à 35 % en poids.

**Patentansprüche**

**1.** Verfahren zur Herstellung einer elektrisch leitenden Polymermasse, umfassend die Herstellung eines Gemisches aus einer Lösung eines eigen-leitfähigen Polymers (Komponente a) und eines heißhärtenden, thermoplastischen oder elastomeren Polymers (Komponente b), und gegebenenfalls Entfernung des Lösungsmittels, wobei die Komponente a in einem Gewichtsverhältnis, bezogen auf die Komponente b, von 0,005:1 bis 3:1 angewandt wird und die Lösung einen Feststoffgehalt von 2 bis 75 Gew.-% aufweist, das eigen-leitfähige Polymer ein elektrisch leitfähiges, gestapeltes makrocyclisches Metallkomplex-Polymer ist auf der Basis von Porphyrin oder einem Derivat davon, das einen organi-schen Brückenliganden umfaßt, enthaltend $\pi$-Elektronen, die eine Delokalisierung entlang der Polymerkette ermöglichen, und wobei das Metallatom Fe, Ru, Rh, Co, Mn oder Cr ist und das Lösungsmittel ausgewählt ist aus 1,3-Dimethyl-2-imidazolidanon, Hexamethylphosphortriamid, Cyclohexanon, Ethylencarbonat, Dimethylacetamid, Nitrobenzol, Ethylenglykol, Glycerin, Glycerinmonostearat, N-Methyl-2-pyrrolidon, 1,3-Dimethyl-3,4,5,6-tetrahydro-2-pyrimidon, Sulfolan, Schwefelsäure und m-Cresol.

**2.** Verfahren nach Anspruch 1, wobei das Metallatom Fe oder Co und die makrocyclische Struktur Phthalocyanin ist.

**3.** Verfahren nach Anspruch 1 oder 2, wobei das Lösungsmittel ausgewählt ist aus 1,3-Dimethyl-2-imidazolidanon, Hexamethylphosphortriamid, Cyclohexanon, Ethylencarbonat, Dimethylacetamid, Nitrobenzol, Ethylenglykol, Glycerin, Glycerinmonostearat, N-Methyl-2-pyrrolidon, 1,3-Dimethyl-3,4,5,6-tetrahydro-2-pyrimidon, Sulfolan, Schwefelsäure und m-Cresol.

**4.** Verfahren nach einem der Ansprüche 1 bis 3, wobei der organische Brückenligand Cyno, Pyrazin, Tetrazin, Bipyridin, Bipyridylethin, Thiocyanid, Azid oder Diisocyanobenzol ist.

**5.** Verfahren nach einem der Ansprüche 1 bis 4, wobei das heißhärtende Polymer ein Epoxyharz ist.

**6.** Verfahren nach einem der Ansprüche 1 bis 4, wobei das thermoplastische Polymer ein Polyolefin ist.

**7.** Verfahren nach einem der Ansprüche 1 bis 4, wobei das thermoplastische Polymer ein Polyarylamid ist.

**8.** Verfahren nach einem der Ansprüche 1 bis 4, wobei das elastomere Copolymer ein Styrol/Butadien-Copolymer ist.

**9.** Verfahren nach einem der Ansprüche 1 bis 8, wobei das Gewichtsverhältnis von Komponente a Zu Komponente b 0,02:1 bis 0,25:1 ist.

**10.** Verfahren nach einem der Ansprüche 1 bis 9, wobei der Feststoffgehalt 2 bis Zu 35 Gew.-% beträgt.